# FASCICULE DE BREVET EUROPEEN

(11) **EP 3 183 953 B1**
(45) Date de publication et mention de la délivrance du brevet: **20.05.2020**
(21) Numéro de dépôt: 16202556.3
(22) Date de dépôt: 07.12.2016
(51) Int. Cl.: A01G 17/06, A01G 17/14

(54) **PIQUET D'EXTRÉMITÉ**
ÄUSSERSTE STANGE
END POST

(30) Priorité: 21.12.2015 FR 1563008
(43) Date de publication de la demande: 28.06.2017
(73) Titulaire: Voestalpine Profilafroid, 60930 Bailleul-Sur-Therain (FR)
(72) Inventeur: GOUTEUX, Sébastien, 60530 Ercuis (FR); MOZET, Stéphane, 60112 Troissereux (FR)
(74) Mandataire: Novagraaf Technologies

(56) Documents cités:
- EP-A1- 2 428 111
- WO-A1-2013/010824
- FR-A1- 2 529 435
- FR-A1- 2 570 575
- FR-A1- 2 675 658
- US-A1- 2004 093 792

## Description

### Domaine technique

La présente invention concerne un piquet d'extrémité utilisable dans de le domaine agricole, en particulier dans la viticulture.

### État de la technique

Il est habituel dans le domaine de l'agriculture d'organiser les plantes en rangées. En particulier, dans le domaine de la viticulture, les sarments de vigne sont guidés entre des fils de palissage fixés à une rangée de piquets plantés dans le sol. Cette pratique permet d'éviter les cassures de branches qui pourraient se produire sous l'effet du poids du feuillage ou des fruits, et de guider la croissance des jeunes pousses.

Afin d'assurer la solidité des piquets et des fils de palissage, il est classique que chaque rangée de piquets comporte un piquet dit d'extrémité à chacune de ses deux extrémités. Un tel piquet d'extrémité est une partie essentielle de la structure de palissage et de ce fait il doit immanquablement être solide et résistant pour assurer la solidité de la structure qui soutient les fruits en pleine croissance.

Le piquet d'extrémité est habituellement planté dans le sol avec un certain angle d'inclinaison vers l'extérieur de la rangée des piquets et fixé dans la plupart des cas par un ou plusieurs fils d'amarre à un point d'ancrage.

Un problème de ce système de palissage connu de l'état de la technique réside dans le fait que le piquet d'extrémité doit être positionné avec une inclinaison et au moins un fil d'amarre doit être installé pour relier le piquet à une amarre plantée à l'extérieur de la rangée à une certaine distance du piquet d'extrémité. Ceci réduit l'espace entre rangées et gène le passage d'engins agricoles. En outre, le fil d'amarre peut se défaire et l'amarre peut se détacher du sol ce qui fragilise la stabilité de la structure de palissage et risque d'endommager les fruits.

En outre, la tension du fil d'amarre doit être vérifiée régulièrement, ce qui cause une perte de temps.

Il existe également un risque de chutes du personnel. Un piquet d'extrémité selon le préambule de la revendication 1 est décrit dans le document FR 2529435.

L'objectif de la présente invention est de résoudre les inconvénients des piquets d'extrémités connus de l'état de la technique, pour permettre un gain d'espace, faciliter le passage d'engins agricoles et renforcer la sécurité du personnel.

### Description de l'invention

À cet effet, l'invention a pour objet un piquet d'extrémité comprenant:
- Un piquet principal métallique comprenant une partie inférieure destinée à être plantée au sol et une partie supérieure destinée à tendre des fils de palissage d'un rang de plantes,
- Un piquet support métallique plus petit que le piquet principal, destiné à être ancré au sol à l'intérieur du rang, et
- Une jambe de force comprenant une première extrémité fixée au piquet principal et une deuxième extrémité fixée au piquet support, ladite jambe de force étant agencée entre le piquet principal et le piquet support selon un angle alpha de manière à prendre appui sur le piquet support et soutenir le piquet principal, caractérisé en ce qu'il comprend une pelle d'ancrage destinée à être implantée dans le sol et a former une embase avec le piquet support.

Ainsi, le piquet d'extrémité selon l'invention comprend une jambe de force qui prend appui sur un piquet support pour soutenir le piquet principal et compenser les efforts dus à la tension exercés par les fils de palissage sur le piquet principal. De ce fait, grâce à cette jambe de force, il n'est plus nécessaire d'amarrer le piquet principal à une ancre plantée dans le sol en bout de rang.

En outre, comme le piquet support et la jambe de force sont à l'intérieur du rang, la suppression de l'amarrage permet un gain d'espace et en conséquence une facilité de passage d'engins agricoles.

Un tel piquet d'extrémité est également plus facile à installer qu'un piquet incliné et est aussi plus résistant aux contraintes de mécanisation, par exemple, aux vibrations mécaniques résultant d'un taillage.

Enfin, la suppression du fil d'amarre a également pour conséquence de limiter le risque de chutes du personnel.

Le piquet d'extrémité comprend une pelle d'ancrage destinée à être implantée dans le sol, agencée avec le piquet support de manière à renforcer la fixation du piquet support au sol. Une telle pelle d'ancrage renforce la fixation du piquet support et en conséquence elle renforce la stabilité de la jambe de force et donc de l'ensemble du piquet d'extrémité.

Avantageusement, la jambe de force est fixée au piquet principal à l'aide d'un moyen de fixation réglable agencé de manière à permettre un réglage en hauteur de la première extrémité de la jambe de force par rapport au piquet principal. Le moyen de fixation réglable, est, par exemple, un collier de fixation.

Ceci permet d'ajuster facilement la position de la jambe de force par rapport à la longueur du piquet principal et à la longueur de cette jambe de force pour trouver une meilleure stabilité du piquet d'extrémité.

Selon un mode de réalisation, le piquet principal est creux et a, par exemple, une section sensiblement en forme de C.

Avantageusement, le piquet principal comporte des linguets. Les linguets facilitent l'installation de fils de palissage.

Avantageusement, le piquet principal comprend une partie supérieure recouverte d'un habillage en bois. Un habillage bois procure un aspect plus esthétique au piquet principal tout en gardant une résistance et une durabilité beaucoup plus élevée que celle d'un piquet entièrement en bois.

Avantageusement, le piquet principal a une section extérieure et l'habillage en bois a une section intérieure, d'une forme sensiblement complémentaire avec la section extérieure du piquet principal.

Selon un mode de réalisation:
- l'habillage en bois présente une gorge avec un fond et une ouverture donnant accès audit fond, le piquet principal étant logé dans ladite gorge ;
- le piquet principal présente au niveau de ladite ouverture un rail et un moyen de fixation de la jambe de force agencé de manière à pouvoir coulisser le long du rail.

### Brève description des figures

L'invention sera mieux comprise et d'autres particularités et avantages apparaîtront à la lecture de la description qui va suivre, la description faisant référence aux dessins annexés parmi lesquels :
- la figure 1 représente une vue de côté d'un piquet d'extrémité conforme à un exemple de réalisation de l'invention ;
- la figure 2 représente une vue en perspective du piquet d'extrémité la figure 1, avec une pelle d'ancrage ;
- la figure 3 représente une vue d'un piquet d'extrémité selon un deuxième exemple de réalisation, dans lequel le piquet comporte un habillage en bois ;
- la figure 4 est une vue agrandie de l'extrémité supérieure de la figure 3.

### DESCRIPTION DÉTAILLÉE

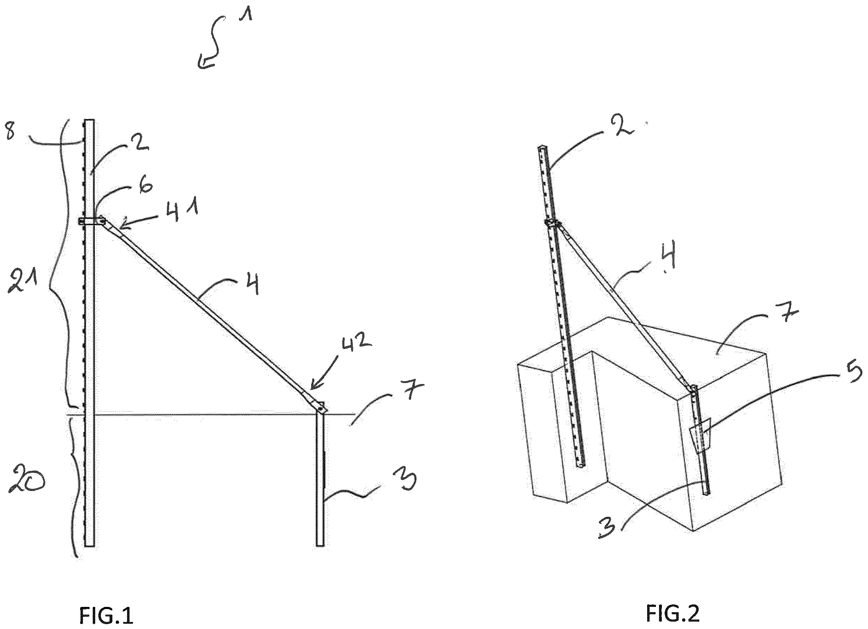

Un piquet d'extrémité 1 selon l'invention est représenté sur les figures 1 et 2. Le piquet d'extrémité 1 comporte un piquet principal 2 est un profilé, comprenant une partie inférieure 20 destinée comme illustré en figure 1 et 2 à être plantée dans le sol 7 et une partie supérieure 21 destinée à s'étendre verticalement au-dessus du sol 7 et à recevoir un ensemble de fils de palissages non représentés sur la figure 1. Le piquet d'extrémité 1 comporte également un piquet support 3 plus petit que le piquet principal 2 et qui est destiné à être planté dans le sol 7. Une jambe de force 4 est fixée par une première extrémité 41 au piquet principal 2 et par une deuxième extrémité 42 au piquet support 3. Cette jambe de force 4 prend appui sur le piquet support 3 et renforce le piquet principal 2. Ceci permet d'avoir une bonne stabilité globale du piquet d'extrémité 1.

En outre, la position de la première extrémité 41 de la jambe de force 4 peut être adaptée à la hauteur de la partie supérieure 21 du piquet 2. Ceci est possible grâce à un collier de serrage 6 mobile le long de la partie supérieure 21 du piquet principal 2.

De manière optionnelle, le piquet principal 2 comprend des linguets 8 destinés à faciliter le passage de fils de palissage non montrés sur les figures.

La figure 2, illustre une vue en perspective du piquet d'extrémité 1 de la figure 1 sur laquelle est visible, en plus des éléments décrit précédemment, une pelle d'ancrage 5, qui a pour rôle de renforcer la fixation du piquet support 3. Le piquet support 3 et la pelle d'ancrage 5 forment une embase qui permet d'apporter une stabilité globale au piquet d'extrémité 1.

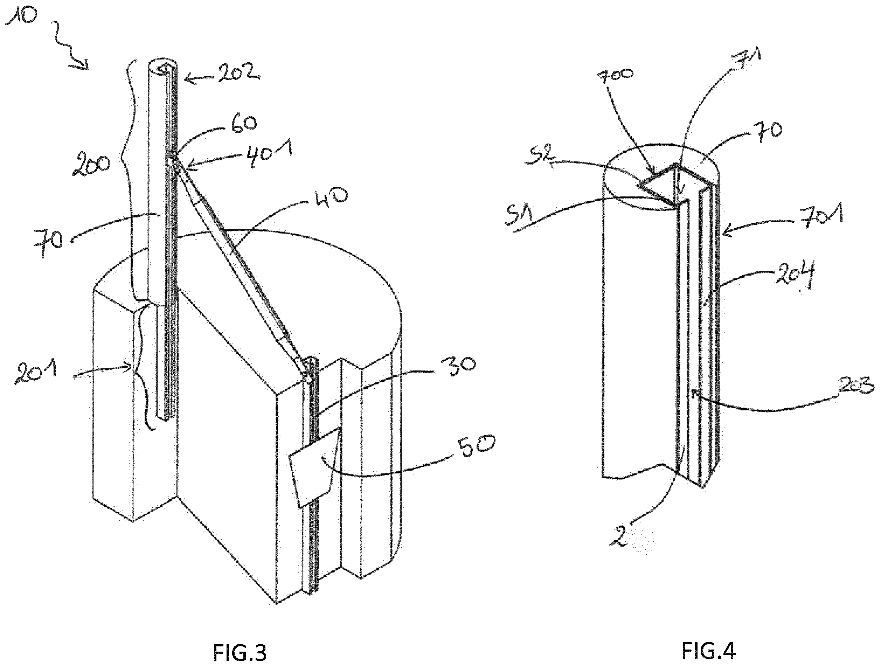

La figure 3 représente une vue en perspective d'un piquet d'extrémité 10 selon un deuxième mode de réalisation de l'invention dans lequel la partie supérieure 200 du piquet principal 2 comporte un habillage en bois 70. La partie inférieure 201 du piquet principal 2, le piquet support 30, la pelle d'ancrage 50 et la jambe de force 40 sont inchangés par rapport au piquet d'extrémité 1 représenté aux figures 1 et 2.

Le piquet principal 2 est creux et présente une face ouverte 203 en direction de la jambe de force 40. Ladite face ouverte 203 comporte un rail 204 auquel l'extrémité supérieure 401 de la jambe de force est fixée à l'aide d'une patte de fixation 60 apte à glisser le long du rail 204.

La figure 4 représente une vue agrandie de l'extrémité supérieure 200 du piquet principal 2 de la figure 3. Comme cela est visible sur la figure 4, le piquet principal 2 est creux et a une forme d'un profil de section S1 sensiblement en C avec la face ouverte 203 en direction de la jambe de force 40.

La face ouverte 203 comprend le rail 204 auquel est fixé de manière mobile la patte de fixation 60 montrée en figure 3. Cette patte de fixation est par exemple fixée au rail 204 à l'aide de deux plaques, non montrées sur les figures, l'une du côté intérieure du rail 204 et l'autre du côté extérieur du rail 204 et vissées ensemble avec la patte de fixation 60. La vis peut serrer les deux plaques pour immobiliser la patte de fixation, et les desserrer pour permettre à la patte 60 de coulisser sur le rail 204.

L'habillage en bois 70 présente une gorge 71 ayant une section S2 en forme de C. La gorge 71 comprend un fond 700 et une ouverture 701 donnant accès au fond 700.

Comme le montre la figure 4, le piquet principal 2 est logé dans la gorge 71 et fixé à l'habillage en bois 70 par un moyen de fixation, par exemple une vis, non montré sur les figures.

Les sections S1 et S2 peuvent évidemment avoir diverses formes. Elles peuvent être complémentaires de manière à permettre au piquet principal d'être logé fermement dans la gorge.

## Revendications

1. Piquet d'extrémité (1) comprenant:
- un piquet principal (2) métallique comprenant une partie inférieure (20) destinée à être plantée au sol et une partie supérieure destinée (21) à tendre des fils de palissage d'un rang de plantes,
- un piquet support (3) métallique, plus petit que le piquet principal (2), destiné à être ancré au sol à l'intérieur du rang, et
- une jambe de force (4) comprenant une première extrémité (41) fixée au piquet principal (2) et une deuxième extrémité (42) fixée au piquet support (3), ladite jambe de force (4) étant agencée entre le piquet principal (2) et le piquet support (3) selon un angle alpha de manière à prendre appui sur le piquet support (3) et soutenir le piquet principal (2),
**caractérisé en ce qu'**il comprend une pelle d'ancrage (5) destinée à être implantée dans le sol et à former une embase avec le piquet support (3).

2. Piquet d'extrémité (1) selon la revendication 1 , dans lequel la jambe de force (4) est fixée au piquet principal (2) à l'aide d'un moyen de fixation réglable (6) agencé de manière à permettre un réglage en hauteur de la première extrémité (41) de la jambe de force (4) par rapport au piquet principal (2).

3. Piquet d'extrémité (1) selon la revendication 2, dans lequel le moyen de fixation réglable est un collier de fixation.

4. Piquet d'extrémité (1) selon l'une quelconque des revendications 1 à 3, dans lequel le piquet principal est creux.

5. Piquet d'extrémité (1) selon la revendication 4, dans lequel le piquet principal (2) a une section sensiblement en forme de C.

6. Piquet d'extrémité selon l'une quelconque des revendications 1 à 5, dans lequel le piquet principal comporte des linguets (8).

7. Piquet d'extrémité (10) selon l'une quelconque des revendications 1 à 6, dans lequel le piquet principal (20) comprend une partie supérieure (200) recouverte d'un habillage en bois (70).

8. Piquet d'extrémité selon la revendication 7, dans lequel le piquet principal (20) a une section extérieure S1 et l'habillage en bois a une section intérieure S2, d'une forme sensiblement complémentaire avec S1 du piquet principal(2).

9. Piquet d'extrémité selon l'une quelconque des revendications 7 et 8 dans lequel:
- l'habillage en bois (70) présente une gorge (71) avec un fond (700) et une ouverture (701) donnant accès audit fond (700), le piquet principal (20) étant logé dans ladite gorge (71);
- le piquet principal (20) présente au niveau de ladite ouverture (701) un rail (204) et un moyen de fixation (60) de la jambe de force (40) agencé de manière à pouvoir coulisser le long dudit rail (204).

## Patentansprüche

1. Äußerste Stange (1) umfassend:
- eine metallische Hauptstange (2), umfassend einen unteren Teil (20), der dazu bestimmt ist, in den Boden eingebracht zu sein, und einen oberen Teil (21), der dazu bestimmt ist, Spalierdrähte einer Pflanzenreihe zu spannen,
- eine metallische Stützstange (3), die kleiner als die Hauptstange (2) ist, die dazu bestimmt ist, im Boden innerhalb der Reihe verankert zu sein, und
- eine Strebe (4), umfassend ein erstes Ende (41), das an der Hauptstange (2) befestigt ist, und ein zweites Ende (42), das an der Stützstange (3) befestigt ist, wobei die Strebe (4) zwischen der Hauptstange (2) und der Stützstange (3) gemäß einem Winkel Alpha derart eingerichtet ist, dass sie sich auf der Stützstange (3) abstützt und die Hauptstange (2) stützt,
**dadurch gekennzeichnet, dass** sie einen Verankerungsspaten (5) umfasst, der bestimmt ist, in den Boden eingesetzt zu sein und mit der Stützstange (3) eine Basis bildet.

2. Äußerste Stange (1) nach Anspruch 1, wobei die Strebe (4) an der Hauptstange (2) mit Hilfe eines einstellbaren Befestigungsmittels (6) befestigt ist, das derart eingerichtet ist, dass eine Einstellung in der Höhe des ersten Endes (41) der Strebe (4) in Bezug auf die Hauptstange (2) möglich ist.

3. Äußerste Stange (1) nach Anspruch 2, wobei das einstellbare Befestigungsmittel eine Befestigungsschelle ist.

4. Äußerste Stange (1) nach einem der Ansprüche 1 bis 3, wobei die Hauptstange hohl ist.

5. Äußerste Stange (1) nach Anspruch 4, wobei die Hauptstange (2) einen etwa C-förmigen Querschnitt hat.

6. Äußerste Stange nach einem der Ansprüche 1 bis 5, wobei die Hauptstange Feststeller (8) aufweist.

7. Äußerste Stange (10) nach einem der Ansprüche 1 bis 6, wobei die Hauptstange (20) einen oberen Teil (200) umfasst, der von einer Holzverkleidung (70) bedeckt ist.

8. Äußerste Stange nach Anspruch 7, wobei die Hauptstange (20) einen äußeren Querschnitt S1 hat und die Holzverkleidung einen inneren Querschnitt S2 mit einer Form hat, die etwa mit S1 der Hauptstange (2) komplementär ist.

9. Äußerste Stange nach einem der Ansprüche 7 und 8, wobei:
- die Holzverkleidung (70) eine Nut (71) mit einem Boden (700) und einer Öffnung (701) aufweist, die zu dem Boden (700) Zugang gewährt, wobei die Hauptstange (20) in der Nut (71) untergebracht ist;
- die Hauptstange (20) im Bereich der Öffnung (701) eine Schiene (204) und ein Befestigungsmittel (60) der Strebe (40) aufweist, das derart eingerichtet ist, dass es entlang der Schiene (204) gleiten kann.

## Claims

1. End post (1) comprising:
- a main metal post (2) comprising a lower portion (20) intended to be pegged in the ground and an upper portion (21) intended to extend trellising wires of a row of plants,
- a support metal post (3), smaller than the main post (2), intended to be anchored in the ground inside the row, and
- a load strut (4) comprising a first end (41) fixed to the main post (2) and a second end (42) fixed to the support post (3), said load strut (4) being arranged between the main post (2) and the support post (3) according to an alpha angle so as to bear on the support post (3) and support the main post (2),
**characterised in that** it comprises an anchoring spade (5) intended to be installed in the ground and to form a base with the support post (3).

2. End post (1) according to claim 1, wherein the load strut (4) is fixed to the main post (2) using an adjustable fixing means (6) arranged so as to make it possible to adjust the height of the first end (41) of the load strut (4) with respect to the main post (2).

3. End post (1) according to claim 2, wherein the adjustable fixing means is a mounting bracket.

4. End post (1) according to any one of claims 1 to 3, wherein the main post is hollow.

5. End post (1) according to claim 4, wherein the main post (2) has a substantially C-shaped cross-section.

6. End post (1) according to any one of claims 1 to 5, wherein the main post comprises safety latches (8).

7. End post (10) according to any one of claims 1 to 6, wherein the main post (20) comprises an upper portion (200) covered with a wooden covering (70).

8. End post according to claim 7, wherein the main post (20) has an outer cross-section S1 and the wooden covering has an inner cross-section S2, of a shape which is substantially complementary with S1 of the main post (2) .

9. End post according to any one of claims 7 and 8, wherein:
- the wooden covering (70) has a recess (71) with a bottom (700) and an opening (701) giving access to said bottom (700), the main post (20) being housed in said recess (71);
- the main post (20) has, at said opening (701), a rail (204) and a means for fixing (60) the load strut (40) arranged so as to be able to slide along said rail (204) .
